# EUROPÄISCHE PATENTANMELDUNG

(11) **EP 3 651 311 A1**
(43) Veröffentlichungstag der Anmeldung: **13.05.2020**
(21) Anmeldenummer: 18205030.2
(22) Anmeldetag: 07.11.2018
(51) Int. Cl.: H02J 9/06, G06F 1/30, H02J 7/35

(54) **ANORDNUNG ZUR SPANNUNGS- UND FREQUENZUNABHÄNGIGEN UNTERBRECHUNGSFREIEN STROMVERSORGUNG MIT EINEM BIDIREKTIONALEN UMRICHTER**

(71) Anmelder: AEG Power Solutions GmbH, 59581 Warstein-Belecke (DE)
(72) Erfinder: Vogt, Thorsten, 59929 Brilon (DE); Barnhusen, Hartmut, 59494 Soest Müllingsen (DE)
(74) Vertreter: Schäperklaus, Jochen

(57) **Zusammenfassung**

Die vorliegende Erfindung betrifft eine Anordnung (A) zur spannungs- und frequenzunabhängigen unterbrechungsfreien Stromversorgung
- mit einem ersten Eingang (E1) zur Verbindung mit einem Versorgungsnetz (N),
- mit einem Umrichter (U), der einen Eingang auf einer Wechselstromseite und einen Ausgang auf einer Gleichstromseite hat,
- mit einem Gleichstromzwischenkreis (ZG),
- mit einem Energiespeicher (B),
- mit einem Wechselrichter (W), der einen Eingang und einen Ausgang hat, und
- mit einem ersten Ausgang (A1) zur Versorgung von Lasten (L1),
wobei
- der Ausgang auf der Gleichstromseite des Umrichters (U) mit dem Gleichstromzwischenkreis (ZG) verbunden ist,
- der Energiespeicher (B) mit dem Gleichstromzwischenkreis (ZG) verbunden ist,
- der Eingang des Wechselrichters (W) mit dem Gleichstromzwischenkreis (ZG) verbunden ist,
- der Ausgang des Wechselrichters (W) mit dem ersten Ausgang (A1) der Anordnung (A) verbunden ist,
wobei
- die Anordnung (A) einen Wechselstromzwischenkreis (ZW) aufweist,
- die Anordnung (A) einen ersten Schalter (S) aufweist und
- die Anordnung (A) einen zweiten Ausgang (A2) zur Verbindung mit Lasten (A2) aufweist,
wobei
- der erste Eingang (E1) der Anordnung mit einer ersten Seite des ersten Schalters (S) verbunden ist,
- eine zweite Seite des ersten Schalters (S) mit dem Wechselstromzwischenkreis (ZW) verbunden ist,
- der Eingang auf der Wechselstromseite des Umrichters (U) mit dem Wechselstromzwischenkreis (ZW) verbunden ist und
der zweite Ausgang (A2) der Anordnung (A) mit dem Wechselstromzwischenkreis (ZW) verbunden ist.

## Beschreibung

Die vorliegende Erfindung betrifft eine Anordnung zur spannungs- und frequenzunabhängigen unterbrechungsfreien Stromversorgung
- mit einem ersten Eingang zur Verbindung mit einem Versorgungsnetz,
- mit einem Umrichter, der einen Eingang auf einer Wechselstromseite und einen Ausgang auf einer Gleichstromseite hat,
- mit einem Gleichstromzwischenkreis,
- mit einem Energiespeicher,
- mit einem Wechselrichter, der einen Eingang und einen Ausgang hat, und
- mit einem ersten Ausgang zur Versorgung von Lasten,
wobei
- der Ausgang auf der Gleichstromseite des Umrichters mit dem Gleichstromzwischenkreis verbunden ist,
- der Energiespeicher mit dem Gleichstromzwischenkreis verbunden ist,
- der Eingang des Wechselrichters mit dem Gleichstromzwischenkreis verbunden ist und
- der Ausgang des Wechselrichters mit dem ersten Ausgang der Anordnung verbunden ist.

Eine Anordnung zur spannungs- und frequenzunabhängigen unterbrechungsfreien Stromversorgung mit den vorstehenden Merkmalen ist aus dem Stand der Technik bekannt. Sie werden zur Versorgung von Wechselstromlasten eingesetzt, bei denen eine hohe Verfügbarkeit gefordert ist.

Bei einer Anordnung zur spannungs- und frequenzunabhängigen unterbrechungsfreien Stromversorgung ist der Eingang der Anordnung direkt auf einen Gleichrichter geführt, an den die Energiespeicher angeschlossen sind. Der Ausgang der Anordnung wird von dem Wechselrichter versorgt, der im störungsfreien Betrieb und bei vorhandener Netzspannung am Eingang der Anordnung, also dem Normalbetrieb, die notwendige Energie über den Umrichter aus dem Versorgungsnetz bezieht. Parallel zur Versorgung der Last wird über den Umrichter der Energiespeicher geladen. Erst bei Netzausfall am Eingang der Anordnung oder bei unzureichender Spannung am Eingang der Anordnung wird der Ausgang der Anordnung über den Wechselrichter aus dem Energiespeicher versorgt.

Da der Umrichter und der Wechselrichter ständig mit einem Betriebsstrom belastet sind, müssen sie besonders hochwertig sein. Die Komponenten des Umrichters und des Wechselrichters sind daher im Vergleich teuer.

Sowohl bei der Gleichrichtung im Umrichter als auch bei der Wechselrichtung im Wechselrichter treten Verluste auf, was den Wirkungsgrad verringert. In den Produktbeschreibungen von Anordnungen zur spannungs- und frequenzunabhängigen unterbrechungsfreien Stromversorgung ist in der Regel der Wirkungsgrad bei voller Last angegeben. Da die meisten Anordnungen zur spannungs- und frequenzunabhängigen unterbrechungsfreien Stromversorgung aber nicht voll ausgelastet eingesetzt werden, sind die in der Regel niedrigeren Wirkungsgrade bei Teillast für die korrekte Berechnung des Stromverbrauchs und Kosten entscheidend. Ein Wirkungsgrad von mehr als 95 % bei voller Last kann heute als Standard für eine Anordnung zur spannungs- und frequenzunabhängigen unterbrechungsfreien Stromversorgung bezeichnet werden.

Ein Vorteil von Anordnungen zur spannungs- und frequenzunabhängigen unterbrechungsfreien Stromversorgung ist, dass diese nicht nur vor den Folgen eines Stromausfalls, einer Unterspannung und einer Überspannung, sondern auch vor Schwankungen der Frequenz und vor Oberschwingungen schützt. Daher werden Anordnungen zur spannungs- und frequenzunabhängigen unterbrechungsfreien Stromversorgung bevorzugt in Anwendungsgebieten eingesetzt, die hohe Kriterien an die tolerierbaren Ausfallzeiten stellen, wie z. B. in der Stromversorgung eines Rechenzentrums.

Aber nicht alle Verbraucher in einer Einrichtung müssen mit einem hohen Anspruch vor Ausfällen geschützt werden.

Neben den Anordnungen zur spannungs- und frequenzunabhängigen unterbrechungsfreien Stromversorgung gibt es auch Anordnungen zur spannungs- und frequenzabhängigen unterbrechungsfreien Stromversorgung. Bei diesen erfolgt die Versorgung der abzusichernden Lasten nur im Falle eines Ausfalls des Versorgungsnetzes aus dem Energiespeicher, der im Normalbetrieb mit Energie aus dem Versorgungsnetz geladen wird. Zwischen den Energiespeicher einerseits und einem Eingang der Anordnung zur Verbindung mit dem Versorgungsnetz andererseits ist ein Gleichrichter eingesetzt, über den im Normalbetrieb der Energiespeicher geladen wird. Im Fall eines Netzausfalls wird die abzusichernde Last aus dem Energiespeicher versorgt. Dazu wird der Ausgang der Anordnung über einen Wechselrichter aus dem Energiespeicher versorgt. Der Ausgang kann dazu über einen Schalter mit dem Ausgang des Wechselrichters verbunden werden.

Im Normalbetrieb ist somit bei Anordnungen zur spannungs- und frequenzabhängigen unterbrechungsfreien Stromversorgung der Wechselrichter außer Betrieb. Die Komponenten des Wechselrichters werden somit im Vergleich zu einer Anordnung zur spannungs- und frequenzunabhängigen unterbrechungsfreien Stromversorgung deutlich weniger beansprucht. Die Komponenten können daher etwas weniger hochwertig sein. Außerdem treten im Normalbetrieb im Wechselrichter keine Verluste auf. Aufgrund des Schaltvorgangs beim Verbinden des Ausgangs der Anordnung mit dem Ausgang des Wechselrichters beim Eintritt einer Störung der Spannung am Eingang der Anordnung kann es zu kurzen Spannungsunterbrechungen oder - Schwankungen von wenigen Millisekunden am Ausgang der Anordnung kommen, weshalb eine Anordnung zur spannungs- und frequenzabhängigen unterbrechungsfreien Stromversorgung für besonders kritische Lasten, wie zum Beispiel Rechenzentren, nicht verwendet wird, sondern nur für Lasten, bei denen diese Unterbrechungen und Schwankungen unkritisch sind.

In vielen Einrichtungen gibt es kritische und weniger kritische Lasten, die im Fall einer Störung der Stromversorgung aus dem Versorgungsnetz über eine Anordnung zur unterbrechungsfreien Stromversorgung versorgt werden. Diese Einrichtungen haben dann entweder zwei verschiedene Anordnungen, nämlich eine Anordnung zur spannungs- und frequenzabhängigen unterbrechungsfreien Stromversorgung für die weniger kritischen Lasten und eine Anordnung zur spannungs- und frequenzunabhängigen unterbrechungsfreien Stromversorgung für die kritischen Lasten. Alternativ werden weniger kritische Lasten auch an eine Anordnung zur spannungs- und frequenzunabhängigen unterbrechungsfreien Stromversorgung angeschlossen, um eine Anordnung einzusparen. Das führt dazu, dass die Anordnung dann für größere Lasten ausgelegt werden muss. Das macht die Anordnung teurer. Außerdem wird der Betrieb der Anordnung teurer, da die Verlustleistung einer größeren Anordnung bei gleichem Wirkungsgrad größer ist als die Verlustleistung einer kleineren Anordnung.

Es besteht daher das Bedürfnis, eine Versorgung von kritischen und weniger kritischen Lasten einer Einrichtung über eine Anordnung zur unterbrechungsfreien Stromversorgung möglichst effizient durchzuführen.

Hier setzt die vorliegende Erfindung an.

Der vorliegenden Erfindung lag das Problem zu Grunde, eine Anordnung zur unterbrechungsfreien Stromversorgung sowohl für kritische also auch für weniger kritische Lasten zu verbessern.

Dieses Problem wird erfindungsgemäß dadurch gelöst, dass
- die Anordnung einen Wechselstromzwischenkreis aufweist,
- die Anordnung einen ersten Schalter aufweist und
- die Anordnung einen zweiten Ausgang zur Verbindung mit abzusichernden Lasten aufweist,
wobei
- der erste Eingang der Anordnung mit einer ersten Seite des ersten Schalters verbunden ist,
- eine zweite Seite des ersten Schalters mit dem Wechselstromzwischenkreis verbunden ist,
- der Eingang auf der Wechselstromseite des Umrichters mit dem Wechselstromzwischenkreis verbunden ist
- und der zweite Ausgang mit dem Wechselstromzwischenkreis verbunden ist.

Eine Besonderheit der erfindungsgemäßen Anordnung ist der Wechselstromzwischenkreis, der durch den ersten Schalter mit dem ersten Eingang verbunden werden kann oder von dem Eingang getrennt werden kann, und der zweite Ausgang, der mit dem Wechselstromzwischenkreis verbunden ist. An diesen zweiten Ausgang kann eine zweite, weniger kritische Last angeschlossen werden, die im störungsfreien Normalbetrieb über den ersten Eingang und den ersten Schalter aus dem mit dem ersten Eingang verbundenen Netz versorgt werden kann. Bei einer Störung des Netzes kann dann der erste Schalter geöffnet werden, um den Wechselstromzwischenkreis vom Netz zu entkoppeln. Der Wechselstromzwischenkreis kann dann aus der Batterie mit elektrischer Energie auf verschiedene, noch erläuterte Weise versorgt werden. Damit ist es möglich, dass eine über den zweiten Ausgang an den Wechselstromzwischenkreis angeschlossene zweite Last auch bei einer Störung des Netzes mit elektrischer Energie versorgt wird. Die erfindungsgemäße Anordnung bildet für eine an den zweiten Ausgang angeschlossene Last eine spannungs- und frequenzabhängige unterbrechungsfreie Stromversorgung und für die erste Last eine spannungs- und frequenzunabhängige unterbrechungsfreie Stromversorgung.

Eine erfindungsgemäße Anordnung kann eine Steuerung aufweisen, mit welcher die Stellung der Schalter steuerbar ist. Mittels der Steuerung kann der erste Schalter so ansteuerbar sein, dass bei einer nicht ausreichenden oder fehlenden Spannung am ersten Eingang der Anordnung der erste Schalter öffnet, während er bei ausreichender Spannung am ersten Eingang der Anordnung geschlossen ist.

Die Versorgung des Wechselstromzwischenkreises mit elektrischer Energie kann gemäß der Erfindung dadurch ermöglicht werden, dass der Umrichter ein bidirektionaler Umrichter ist, und der Eingang des Umrichters auf der Wechselstromseite ein Ein- und Ausgang ist und der Ausgang des Umrichters auf der Gleichstromseite ein Ein- und Ausgang ist.

Anders als bei einer herkömmlichen Anordnung zur spannungs- und frequenzunabhängigen unterbrechungsfreien Stromversorgung ist der Umrichter nicht ein unidirektionaler Gleichrichter, sondern ein bidirektionaler Umrichter, der auch als Wechselrichter arbeiten kann. Damit ist es möglich, über den Gleichstromzwischenkreis Energie aus dem Energiespeicher zu entnehmen und in den Wechselstromzwischenkreis zu transportieren. Der Wechselrichter treibt in dem Wechselstromzwischenkreis dann einen Wechselstrom, mit dem die an den zweiten Ausgang angeschlossenen Lasten versorgt werden können. Durch den ersten Schalter ist es möglich, den Wechselstromzwischenkreis von dem ersten Eingang der Anordnung zu trennen. Der zweite Ausgang wird bei geöffnetem erstem Schalter und Wechselrichterbetrieb des bidirektionalen Umrichters dann über den Umrichter aus dem Energiespeicher und nicht über den ersten Eingang aus dem Versorgungsnetz versorgt. Ist der erste Schalter geöffnet, ist der Wechselstromkreis vom Versorgungsnetz abgekoppelt.

Gleichzeitig kann über den Wechselrichter der erste Ausgang aus dem Energiespeicher mit Strom versorgt werden. Sowohl eine Versorgung des ersten Ausgangs als auch des zweiten Ausgangs aus dem Energiespeicher ist möglich.

Liegt dagegen keine Störung der Spannungsversorgung des ersten Eingangs aus dem Versorgungsnetz vor, kann der erste Schalter geschlossen sein. Dann arbeitet der bidirektionale Umrichter vorzugsweise im Gleichrichterbetrieb und überträgt Energie über den ersten Eingang, den ersten Schalter, den Wechselstromzwischenkreis, den bidirektionalen Umrichter aus dem Versorgungsnetz in den Gleichstromzwischenkreis. Aus dem Gleichstromzwischenkreis wird dann der Energiespeicher aufgeladen und über den Wechselrichter der erste Ausgang mit Energie versorgt. Zugleich wird auch der zweite Ausgang über den Wechselstromzwischenkreis, den ersten Schalter und den ersten Eingang mit Energie aus dem Versorgungsnetz versorgt.

Betracht man die erfindungsgemäße Anordnung vom ersten Ausgang aus, wirkt die erfindungsgemäße Anordnung wie eine bekannte Anordnung zur spannungs- und frequenzunabhängigen unterbrechungsfreien Stromversorgung. Betracht man die erfindungsgemäße Anordnung dagegen vom zweiten Ausgang aus, wirkt die erfindungsgemäße Anordnung wie eine bekannte Anordnung zur spannungs- und frequenzabhängigen unterbrechungsfreien Stromversorgung. Der Umrichter wirkt dabei im Normalbetrieb als Gleichrichter wie in einer Anordnung zur spannungs- und frequenzunabhängigen unterbrechungsfreien Stromversorgung und bei einer Störung des Versorgungsnetzes als Wechselrichter wie in einer Anordnung zur spannungs- und frequenzabhängigen unterbrechungsfreien Stromversorgung.

Die Erfindung hat den Vorteil, dass die erfindungsgemäße Anordnung zur unterbrechungsfreien Stromversorgung sowohl für kritische und weniger kritische Lasten eingesetzt werden kann, wobei der Wechselrichter lediglich zur Versorgung der kritischen Lasten ausgelegt werden muss. Der bidirektionale Umrichter muss dabei so ausgelegt werden, dass er im Gleichrichterbetrieb die kritischen Lasten und im Wechselrichterbetrieb die weniger kritischen Lasten versorgen kann. Sowohl der Wechselrichter als auch der bidirektionale Umrichter können kleiner ausgelegt werden als im Fall einer herkömmlichen Anordnung zur spannungs- und frequenzunabhängigen unterbrechungsfreien Stromversorgung, an die sowohl kritische als auch weniger kritische Lasten angeschlossen sind. Der Energiespeicher muss so groß ausgelegt werden, dass er sowohl die kritischen als auch die weniger kritischen Lasten so lange versorgen kann, wie es erforderlich ist.

Eine erfindungsgemäße Anordnung kann ein Mittel zur Überwachung der Spannung am ersten Eingang der Anordnung aufweisen. Damit ist es möglich, die Spannung des Versorgungsnetzes zu überwachen und eine Störung der Spannungsversorgung festzustellen.

Eine erfindungsgemäße Anordnung kann eine Steuerung aufweisen, mit welcher die Stellung der Schalter und eine Betriebsweise des bidirektionalen Umrichters steuerbar ist. In Anhängigkeit von der Spannung am ersten Eingang können der erste Schalter und der bidirektionale Umrichter gesteuert werden. So kann mittels der Steuerung der erste Schalter so ansteuerbar sein, dass bei einer nicht ausreichenden oder fehlenden Spannung am ersten Eingang der Anordnung der erste Schalter öffnet, während er bei ausreichender Spannung am Eingang der Anordnung geschlossen ist. Mittels der Steuerung kann der bidirektionale Umrichter so steuerbar sein, das bei geöffnetem ersten Schalter und/oder bei einer nicht ausreichenden oder fehlenden Spannung am ersten Eingang der Anordnung, der bidirektionale Umrichter Energie vom gleichstromseitigen Ein- und Ausgang zum wechselstromseitigen Ein- und Ausgang transportiert, während er bei ausreichender Spannung am ersten Eingang der Anordnung und geschlossenem ersten Schalter Energie vom wechselstromseitigen Ein- und Ausgang zum gleichstromseitigen Ein- und Ausgang transportiert.

Eine weitere Möglichkeit der Versorgung des Wechselstromzwischenkreises mit elektrischer Energie bei gestörtem Netz kann man durch einen zweiten Schalter erreichen, der mit einer ersten Seite mit dem Ausgang des Wechselrichters und mit einer zweiten Seite mit dem Wechselstromzwischenkreis verbunden ist. Mittels der Steuerung kann der zweite Schalter so steuerbar sein, dass bei geöffnetem erstem Schalter der zweite Schalter schließt und Energie vom Ausgang des Wechselrichters zum Wechselstromzwischenkreis transportiert, während er bei ausreichender Spannung am ersten Eingang der Anordnung und geschlossenem ersten Schalter geöffnet ist. Dann erfolgt die Versorgung des Wechselstromzwischenkreises mit elektrischer Energie aus dem Netz.

Vorzugsweise ist mittels der Steuerung der Umrichter so steuerbar, dass bei geöffnetem erstem Schalter und geschlossenem zweitem Schalter der Umrichter keine Energie von seinem Eingang zu seinem Ausgang transportiert.

Der Umrichter kann ein Gleichrichter sein, also ein unidirektionaler Umrichter.

Die Anordnung kann einen dritten Schalter aufweisen, der mit einer ersten Seite mit dem ersten Ausgang der Anordnung und mit einer zweiten Seite mit dem ersten Eingang der Anordnung verbunden ist. Die Wechselspannung am ersten Ausgang der Anordnung wird mit dem Wechselrichter aus dem Gleichspannungszwischenkreis erzeugt. Zur Erhöhung der Versorgungssicherheit verfügt eine Anordnung zur spannungs- und frequenzunabhängigen unterbrechungsfreien Stromversorgung über eine so genannte Bypass-Schaltung umfassend den dritten Schalter, die parallel zum Umrichter und Wechselrichter geschaltet ist. Bei Überlasten am Ausgang der Anordnung oder Auftreten eines Fehlers im Umrichter oder Wechselrichter erfolgt die Versorgung über diesen Bypass, sofern am Eingang der Anordnung eine ausreichende Spannung zur Verfügung steht. Mittels der Steuerung kann der dritte Schalter so steuerbar sein, dass der erste Eingang der Anordnung mit dem ersten Ausgang der Anordnung verbunden wird, falls am ersten Eingang der Anordnung eine ausreichende Spannung anliegt und der bidirektionale Umrichter oder der Wechselrichter ausgefallen sind.

Eine erfindungsgemäße Anordnung kann einen zweiten Eingang aufweisen, der mit dem Gleichstromzwischenkreis verbunden ist. Über diesen zweiten Eingang kann elektrische Energie zur Versorgung des ersten oder zweiten Ausgangs oder zum Laden des Energiespeichers in den Gleichstromzwischenkreis eingespeist werden. An den zweiten Eingang könnte zum Beispiel eine Fotovoltaikanlage oder eine andere Anlage angeschlossen werden, die Gleichstrom erzeugt.

Es ist auch möglich, dass eine erfindungsgemäße Anordnung einen dritten Eingang aufweist, der mit dem Wechselstromzwischenkreis verbunden ist. Über diesen dritten Eingang kann aus einer weiteren Stromquelle, zum Beispiel einem Wechselstromgenerator, elektrische Energie eingespeist werden.

Eine erfindungsgemäße Anordnung kann auch einen dritten Ausgang aufweisen, der mit dem Gleichstromzwischenkreis verbunden ist. Über diesen dritten Ausgang können kritische oder weniger kritische Gleichstromlasten versorgt werden.

Weitere Merkmale und Vorteile der vorliegenden Erfindung werden deutlich anhand der nachfolgenden Beschreibung von Ausführungsbeispielen unter Bezugnahme auf die beiliegende Zeichnung. Darin zeigt:
- Fig. 1: ein schematisches Schaltbild einer ersten erfindungsgemäßen Anordnung,
- Fig. 2: ein schematisches Schaltbild einer zweiten erfindungsgemäßen Anordnung
- Fig. 3: ein schematisches Schaltbild einer dritten erfindungsgemäßen Anordnung.

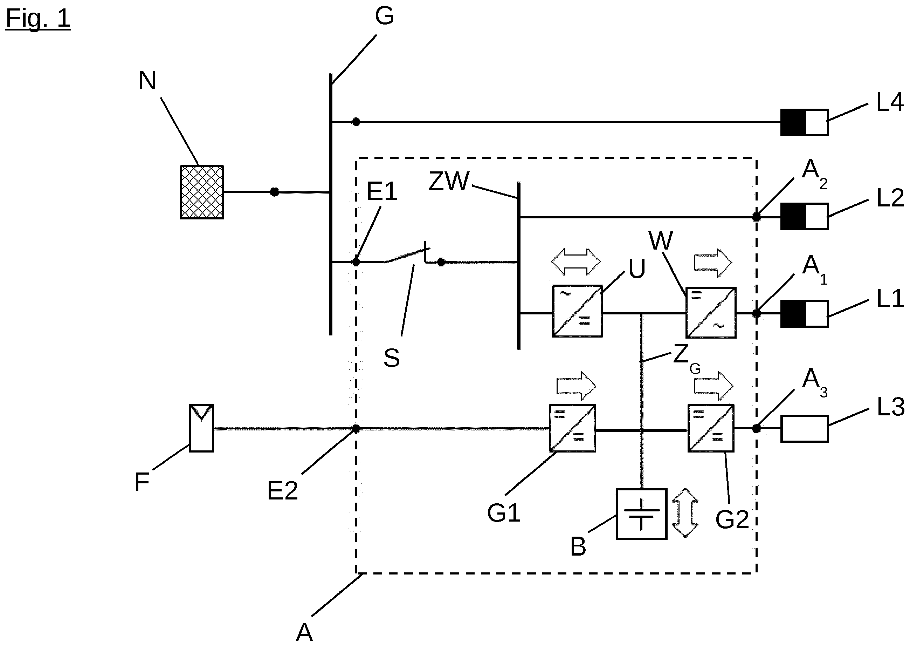

Die erfindungsgemäße Anordnung A gemäß der Fig. 1 ist über ein Stromnetz G in einem Gebäude mit einem ersten Eingang E1 an ein Versorgungsnetz N angeschlossen. Neben der Anordnung A sind auch andere Lasten über das Stromnetz G in dem Gebäude mit dem Versorgungsnetz N verbunden, als Beispiel ist eine Last L4 dargestellt. Diese Last L4 ist nicht abgesichert und ist bei einem Ausfall des Versorgungsnetzes N ohne Strom.

Die Anordnung A gemäß der Fig. 1 weist einen ersten Ausgang A1 auf, an den eine kritische Last L1 angeschlossen ist. An einen zweiten Ausgang A2 der Anordnung ist eine weniger kritische Last L2 angeschlossen.

Die Anordnung A gemäß der Fig. 1 weist einen ersten Schalter S auf, der mit einer Seite mit dem ersten Eingang E1 verbunden ist. Mit einer zweiten Seite ist der Schalter S mit einem Wechselstromzwischenkreis ZW verbunden.

An diesen Wechselstromzwischenkreis ist der zweite Ausgang A2 für die weniger kritische Last L2 angeschlossen, die aus dem Wechselstromzwischenkreis ZW mit elektrischer Energie versorgt werden kann.

An den Wechselstromzwischenkreis ist mit einem Wechselstromein- und -ausgang ebenfalls ein bidirektionaler Umrichter U angeschlossen. Dessen Gleichstromein- und -ausgang ist mit einem Gleichstromzwischenkreis ZG verbunden.

An den Gleichstromzwischenkreis ZG ist mit seinem Eingang ein Wechselrichter W angeschlossen, dessen Ausgang mit dem ersten Ausgang A1 der Anordnung A gemäß der Fig. 1 verbunden ist, an den die kritische Last L1 angeschlossen ist. Die kritische Last L1 kann über den Wechselrichter mit elektrischer Energie aus dem Gleichstromzwischenkreis ZG versorgt werden.

An den Gleichstromzwischenkreis ZG ist ferner ein Energiespeicher, nämlich eine Batterie B angeschlossen. Diese kann elektrische Energie aus dem Gleichstromzwischenkreis aufnehmen und speichern und Energie in den Gleichstromzwischenkreis abgeben.

In einem ungestörten Normalbetrieb werden die Lasten L1 und L2 aus dem Versorgungsnetz N versorgt. Der Schalter S ist dazu geschlossen und der Wechselstromzwischenkreis mit dem Versorgungsnetz N verbunden.

Der bidirektionale Umrichter U wird im Normalbetrieb als Gleichrichter betrieben und nimmt Energie aus dem Wechselstromzwischenkreis auf und erzeugt an seinem Gleichstromein- und -ausgang einen Gleichstrom, der in den Gleichstromzwischenkreis fließt. Ein Teil dieses Gleichstroms lädt die Batterie B auf. Ein anderer Teil wird vom Wechselrichter W in einen Wechselstrom gewandelt, der über den ersten Ausgang A1 die erste Last L1 versorgt.

Kommt es in dem Versorgungsnetz N oder in dem Stromnetz G des Gebäudes zu einer Störung der Energieversorgung, fällt die Versorgung der unkritischen Last L4 und die Versorgung der Anordnung A durch das Versorgungsnetz N aus. Am ersten Eingang E1 der erfindungsgemäßen Anordnung A liegt keine Spannung an. Dann wird der Schalter S geöffnet und der Wechselstromzwischenkreis ZW vom Stromnetz G des Gebäudes und vom Versorgungsnetz N abgekoppelt.

Der bidirektionale Umrichter wechselt vom Gleichrichterbetrieb in den Wechselrichterbetrieb und transportiert elektrische Energie aus dem Gleichstromzwischenkreis ZG in den Wechselstromzwischenkreis ZW. Die Energie wird von der Batterie B in den Gleichstromzwischenkreis eingespeist. Die von dem bidirektionalen Umrichter an seinem Wechselstromein- und -ausgang zur Verfügung gestellte elektrische Spannung treibt einen Wechselstrom zur Versorgung der weniger kritischen Last am zweiten Ausgang A2. Durch das Schalten des Schalters S und durch die Änderungen der Betriebsweise des bidirektionalen Umrichters U kann es dabei zu minimalen Unterbrechungen der Stromversorgung der weniger kritischen Last kommen.

Der Wechselrichter W bezieht wie auch schon im Normalbetrieb und unbeeinflusst durch den Ausfall der Energieversorgung am ersten Eingang E1 Energie aus dem Gleichstromzwischenkreis ZG und stellt diese der an den ersten Ausgang A1 angeschlossenen kritischen Last zur Verfügung.

Die in der Figur 1 dargestellte erfindungsgemäße Anordnung weist aber noch weitere Komponenten und Anschlüsse auf, die bisher noch nicht erwähnt worden sind.

So hat die Anordnung gemäß der Fig. 1 einen zweiten Eingang E2 an den ein Gleichstromerzeuger, im Beispiel handelt es sich um eine Fotovoltaikanlage, angeschlossen ist. Der zweite Eingang E2 ist über einen ersten Gleichspannungswandler G1 an den Gleichstromzwischenkreis angeschlossen. Über den ersten Gleichspannungswandler kann von der Fotovoltaikanlage erzeugte elektrische Energie in den Gleichstromzwischenkreis ZG eingespeist werden. Damit kann im Falle einer Störung der Stromversorgung am ersten Eingang E1 eine Versorgung des Gleichstromzwischenkreises ZG einschließlich einer Ladung der Batterie erfolgen. Sollte die über den zweiten Eingang E2 eingespeiste Energie nicht zur Versorgung des Gleichstromzwischenkreises und aller aus diesem versorgten Lasten L1, L2 ausreichen, kann durch die Energieeinspeisung die Entladung der Batterie B verlangsamt werden.

Bei einer erfindungsgemäßen Anordnung kann, wie in der Fig. 1 dargestellt, auch ein dritter Ausgang A3 vorgesehen sein, der über einen zweiten Gleichstromwandler G2 mit dem Gleichstromzwischenkreis ZG verbunden ist. An den Ausgang A3 kann eine kritische Gleichstromlast L3 angeschlossen werden, die sowohl im Normalbetrieb als auch im Falle einer Störung der Versorgung am ersten Eingang E2 mit elektrischer Energie aus dem Gleichstromzwischenkreis ZG versorgt wird.

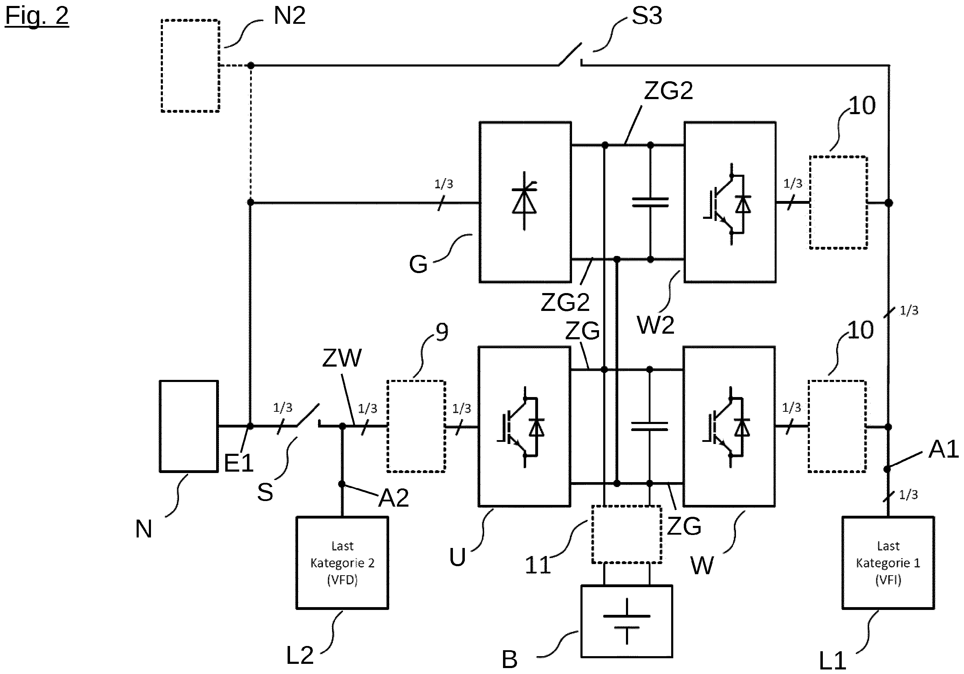

Die in der Fig. 2 dargestellte erfindungsgemäße Anordnung entspricht im Kern der Anordnung aus Fig. 1, auch wenn die Art der Darstellung eine andere ist. Sie weist einen ersten Eingang E1 auf, der mit einem Netz N verbunden ist. Sie weist einen ersten Ausgang A1 auf, an den eine erste, kritische Last L1 angeschlossen ist. Und sie weist einen zweiten Ausgang A2 auf, an den einen zweite, weniger kritische Last L2 angeschlossen ist.

Innerhalb der Anordnung ist der erste Eingang E1 mit einem Schalter S verbunden, der außerdem mit einem Wechselstromzwischenkreis ZW verbunden ist. An den Wechselstromzwischenkreis ZW ist der zweite Ausgang A2 und ein wechselstromseitiger Ein- und Ausgang eines bidirektionalen Umrichters U angeschlossen. Zwischen den wechselstromseitigen Ein- und Ausgang des Umrichters U und den Wechselstromzwischenkreis ZW kann ein erster Transformator 9 zur galvanischen Entkopplung und zur Spannungsanpassung geschaltet sein. Ein gleichstromseitiger Ein- und Ausgang des Umrichters U ist mit einem Gleichstromzwischenkreis ZG verbunden.

An den Gleichstromzwischenkreis ZG ist über einen optionalen Gleichstromwandler 11 eine Batterie B angeschlossen. Der Gleichstromzwischenkreis ZG umfasst optional einen Kondensator zur Spannungsglättung. An den Gleichstromzwischenkreis ZG ist mit seinem Eingang auch ein Wechselrichter W angeschlossen, dessen Ausgang über einen optionalen zweiten Transformator 10 mit dem ersten Ausgang A1 verbunden ist. Soweit entspricht die Anordnung der aus der Fig. 1 bekannten, es ist lediglich eine andere Darstellung gewählt.

Der der erste Schalter S, der Umrichter U, der Gleichstromzwischenkreis ZG und der Wechselrichter W bilden einen ersten Zweig der Anordnung.

Eine Besonderheit der Anordnung ist, dass sie einen zweiten, redundanten Zweig aufweist. Dieser weist einen Gleichrichter G, einen zweiten Gleichstromzwischenkreis ZG2 und einen zweiten Wechselrichter W2 auf.

Der Eingang des Gleichrichters G ist mit dem ersten Eingang E1 verbunden. An den Ausgang des Gleichrichters G ist der zweite Gleichstromzwischenkreis ZG2 angeschlossen. Dieser ist mit dem ersten Gleichstromzwischenkreis ZG1 gekoppelt und so auch mit der Batterie B verbunden. An den zweiten Gleichstromzwischenkreis ist ein zweiter Wechselrichter W2 angeschlossen der mit dem ersten Ausgang A1 verbunden ist, an den die erste, kritische Last L1 angeschossen ist.

Dieser zweite Kreis arbeitet im Hinblick auf die erste Last L1 genauso wie der erste Zweig, weshalb der zweite Zweig und der erste Zweig redundant zueinander sind. Beide Zweige arbeiten als spannungs- und frequenzunabhängige unterbrechungsfreie Stromversorgungen.

Im Hinblick auf die zweite, weniger kritische Last gibt es aber einen entscheidenden Unterschied: Die zweite Last L2 kann bei Netzausfall nur über den im Wechselrichterbetrieb arbeitenden bidirektionalen Umrichter U des ersten Zweigs mit elektrischer Energie aus der Batterie B versorgt werden, sobald der erste Schalter S geöffnet ist und so eine Entkopplung von dem ausgefallenen Netz N erfolgt ist. Eine Versorgung der zweiten Last L2 über den zweiten Zweig ist nicht möglich, da im zweiten Zweig anstelle des Umrichter U ein Gleichrichter G vorgesehen ist, der nicht in der Lage ist aus der Batteriespannung eine Wechselspannung zu erzeugen. Der Gleichrichter G kann zum Beispiel ein Thyristorgleichrichter sein, also aus Thyristoren aufgebaut sein. Der Umrichter U kann dagegen aus Leistungs-MOSFETs aufgebaut sein.

Der Vorteil der Anordnung gemäß Fig. 2 gegenüber der Anordnung aus der Fig. 1 ist, dass im Hinblick auf die erste, kritische Last eine Redundanz vorliegt. Während eines ungestörten Netzbetriebs kann die Versorgung der ersten Last im Hinblick auf den Wirkungsgrad optimal zwischen dem ersten und den zweiten Zweig aufgeteilt werden. Die Aufteilung muss nicht notwendiger Weise symmetrisch sein, da die Zweige unterschiedliche Topologien haben und daher unterschiedliche Verlustkennlinien vorliegen.

Ein weiterer Vorteil ist, dass während des ungestörten Normalbetrieb am Netz N der Umrichter U als aktives Filter genutzt werden kann, um Netzrückwirkungen des Gleichrichter G zu reduzieren. Dadurch ist eine kostengünstigere Ausführung des Gleichrichters G möglich, da Netzfilter für den Gleichrichter G kleiner ausgelegt werden können als sonst üblich.

Die Anordnung gemäß der Fig. 2 weist übrigens optional als dritten Schalter S3 einen Bypass-Schalter auf, der den ersten Ausgang mit einem optionalen zweiten Netz N2 verbinden kann. Das zweiten Netz N2 kann mit dem ersten Netz N1 gekoppelt sein.

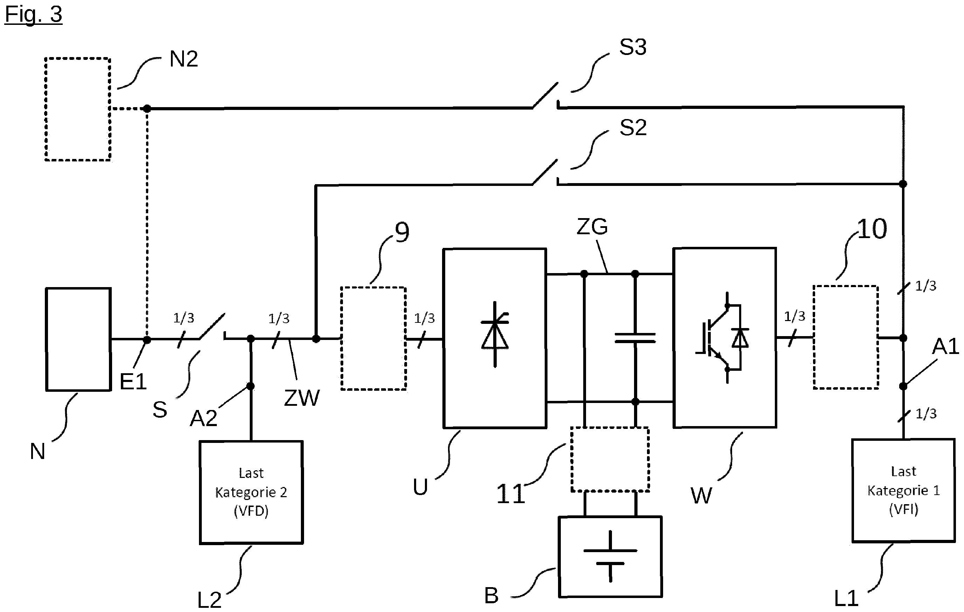

Die erfindungsgemäße Anordnung gemäß der Figur 3 entspricht im Kern dem zweiten Zweig der Anordnung aus der Fig. 2.

Sie weist einen ersten Eingang, einen ersten Schalter S, einen Wechselstromzwischenkreis ZW, optional einen ersten Transformator 9, einen Gleichrichter G, der ein unidirektionaler Umrichter U ist, einen Gleichstromzwischenkreis ZG, einen optionalen Gleichstromwandler 11, eine Batterie B, einen Wechselrichter W, einen optionalen zweiten Transformator 10, einen ersten Ausgang, an den eine erste, kritische Last L1 angeschlossen ist, und einen zweiten Ausgang A2, an den einen zweite, weniger kritische Last L2 angeschlossen ist, auf.

Im störungsfreien Normalbetrieb wird die Anordnung bei geschlossenem erstem Schalter S wie der zweite Zweig der Anordnung gemäß der Fig. 2 betrieben. Bei Störung des Netzes N1 oder des optionalen zweiten Netzes N2 wird die erste Last L1 über den Wechselrichter W aus der Batterie B versorgt.

Eine Besonderheit ist es, wie bei Netzstörung die zweite, weniger kritische Last L2 versorgt wird. Dazu ist über einen zweiten Schalter S2 eine Verbindung vom Ausgang des Wechselrichters W zum Wechselstromzwischenkreis ZW geschaffen. Während im störungsfreien Normalbetrieb der zweite Schalter S2 geöffnet ist, kann der zweite Schalter S2 nach dem Öffnen des ersten Schalters S geschlossen werden. Der Wechselstromzwischenkreis ZW und die über den zweiten Ausgang A2 daran angeschlossene zweite Last L2 wird dann über den Wechselrichter W aus der Batterie B mit elektrischer Energie versorgt. Der Gleichrichter G muss dabei außer Betrieb gesetzt sein.

Im störungsfreien Normalbettrieb wird die zweite Last L2 unmittelbar aus dem Netz N1 oder N2 versorgt. Der Gleichrichter G wird nicht durch die zweite Last L2 belastet.

Der Wechselrichter W muss ebenso wie die Batterie B dieser Anordnung dazu ausgelegt sein, die Last L1 und die Last L2 zu versorgen. Der Gleichrichter G muss dagegen lediglich dazu ausgelegt sein, die Last L1 zu versorgen und die Batterie B zu laden.

## Patentansprüche

1. Anordnung (A) zur spannungs- und frequenzunabhängigen unterbrechungsfreien Stromversorgung
- mit einem ersten Eingang (E1) zur Verbindung mit einem Versorgungsnetz (N),
- mit einem Umrichter (U), der einen Eingang auf einer Wechselstromseite und einen Ausgang auf einer Gleichstromseite hat,
- mit einem Gleichstromzwischenkreis (ZG),
- mit einem Energiespeicher (B),
- mit einem Wechselrichter (W), der einen Eingang und einen Ausgang hat, und
- mit einem ersten Ausgang (A1) zur Versorgung von Lasten (L1),
wobei
- der Ausgang auf der Gleichstromseite des Umrichters (U) mit dem Gleichstromzwischenkreis (ZG) verbunden ist,
- der Energiespeicher (B) mit dem Gleichstromzwischenkreis (ZG) verbunden ist,
- der Eingang des Wechselrichters (W) mit dem Gleichstromzwischenkreis (ZG) verbunden ist,
- der Ausgang des Wechselrichters (W) mit dem ersten Ausgang (A1) der Anordnung (A) verbunden ist,
**dadurch gekennzeichnet, dass**
- die Anordnung (A) einen Wechselstromzwischenkreis (ZW) aufweist,
- die Anordnung (A) einen ersten Schalter (S) aufweist und
- die Anordnung (A) einen zweiten Ausgang (A2) zur Verbindung mit Lasten (A2) aufweist,
wobei
- der erste Eingang (E1) der Anordnung mit einer ersten Seite des ersten Schalters (S) verbunden ist,
- eine zweite Seite des ersten Schalters (S) mit dem Wechselstromzwischenkreis (ZW) verbunden ist,
- der Eingang auf der Wechselstromseite des Umrichters (U) mit dem Wechselstromzwischenkreis (ZW) verbunden ist und
- der zweite Ausgang (A2) der Anordnung (A) mit dem Wechselstromzwischenkreis (ZW) verbunden ist.

2. Anordnung (A) nach einem der Ansprüche 1 bis 3, **dadurch gekennzeichnet, dass** die Anordnung (A) eine Steuerung aufweist, mit welcher die Stellung der Schalter (S) steuerbar ist.

3. Anordnung (A) nach Anspruch 4, **dadurch gekennzeichnet, dass** mittels der Steuerung der erste Schalter (S) so ansteuerbar ist, dass bei einer nicht ausreichenden oder fehlenden Spannung am ersten Eingang (E1) der Anordnung (A) der erste Schalter (S) öffnet, während er bei ausreichender Spannung am ersten Eingang (E1) der Anordnung (A) geschlossen ist.

4. Anordnung (A) nach einem der Ansprüche 1 bis 3, **dadurch gekennzeichnet, dass** der Umrichter (U) ein bidirektionaler Umrichter (U) ist, und der Eingang auf der Wechselstromseite des Umrichters (U) ein Ein- und Ausgang ist und der Ausgang auf der Gleichstromseite des Umrichters (U) ein Ein- und Ausgang ist.

5. Anordnung (A) nach Anspruch 4, **dadurch gekennzeichnet, dass** mittels der Steuerung eine Betriebsweise des bidirektionalen Umrichters (U) so steuerbar ist, das bei geöffnetem ersten Schalter (S) und/oder bei einer nicht ausreichenden oder fehlenden Spannung am ersten Eingang (E1) der Anordnung (A), der bidirektionale Umrichter (U) Energie vom gleichstromseitigen Ein- und Ausgang zum wechselstromseitigen Ein- und Ausgang transportiert, während er bei ausreichender Spannung am ersten Eingang (E1) der Anordnung (A) und geschlossenem ersten Schalter (S) Energie vom wechselstromseitigen Ein- und Ausgang zum gleichstromseitigen Ein- und Ausgang transportiert.

6. Anordnung (A) nach einem der Ansprüche 1 bis 3, **dadurch gekennzeichnet, dass** die Anordnung (A) einen zweiten Schalter (S2) aufweist, der mit einer ersten Seite mit dem Ausgang des Wechselrichters und mit einer zweiten Seite mit dem Wechselstromzwischenkreis (ZW) verbunden ist.

7. Anordnung (A) nach Anspruch 6, **dadurch gekennzeichnet, dass** mittels der Steuerung der zweite Schalter (S2) so steuerbar ist, dass bei geöffnetem ersten Schalter (S) der zweite Schalter (S2) schließt und Energie vom Ausgang des Wechselrichters zum Wechselstromzwischenkreis transportiert, während er bei ausreichender Spannung am ersten Eingang (E1) der Anordnung (A) und geschlossenem ersten Schalter (S) geöffnet ist.

8. Anordnung (A) nach Anspruch 6 oder 7, **dadurch gekennzeichnet, dass** mittels der Steuerung der Umrichter (U) so steuerbar ist, dass bei geöffnetem erstem Schalter (S) und geschlossenem zweiten Schalter (S2), der Umrichter (U) keine Energie von seinem Eingang zu seinem Ausgang transportiert.

9. Anordnung (A) nach einem der Ansprüche 1 bis 8, **dadurch gekennzeichnet, dass** die Anordnung (A) einen dritten Schalter (S3) aufweist, der mit einer ersten Seite mit dem ersten Ausgang (A1) der Anordnung (A) und mit dem ersten Eingang (E1) der Anordnung (A) verbunden ist.

10. Anordnung (A) nach Anspruch 9, **dadurch gekennzeichnet, dass** mittels der Steuerung der dritte Schalter (S3) so steuerbar ist, dass der erste Eingang der Anordnung (A) mit dem ersten Ausgang der Anordnung (A) verbindbar ist, falls am ersten Eingang der Anordnung (A) eine ausreichende Spannung anliegt und der Umrichter (U) oder der Wechselrichter (W) ausgefallen sind.

11. Anordnung (A) nach einem der Ansprüche 1 bis 10, **dadurch gekennzeichnet, dass** die Anordnung (A) einen zweiten Eingang (E2) aufweist, der mit dem Gleichstromzwischenkreis (ZG) verbunden ist.

12. Anordnung (A) nach einem der Ansprüche 1 bis 11, **dadurch gekennzeichnet, dass** die Anordnung (A) einen dritten Eingang aufweist, der mit dem Wechselstromzwischenkreis (ZW) verbunden ist.

13. Anordnung (A) nach einem der Ansprüche 1 bis 12, **dadurch gekennzeichnet, dass** die Anordnung (A) einen dritten Ausgang (A3) aufweist, der mit dem Gleichstromzwischenkreis (ZG) verbunden ist.

14. Anordnung (A) nach Anspruch 1 oder 2, **dadurch gekennzeichnet, dass** die Anordnung (A) ein Mittel zur Überwachung der Spannung am ersten Eingang (E1) der Anordnung (A) aufweist.
